Europäisches Patentamt

European Patent Office

Office européen des brevets

(11) Publication number: **0 507 273 A1**

# EUROPEAN PATENT APPLICATION

(21) Application number: **92105606.5**

(22) Date of filing: **01.04.92**

(51) Int. Cl.5: **B60Q 1/115**, B60Q 1/12, B60Q 1/14

(30) Priority: **02.04.91 KR 531191**

(43) Date of publication of application:
**07.10.92 Bulletin 92/41**

(84) Designated Contracting States:
**DE FR GB IT SE**

(71) Applicant: **Seong, Ki Ho**
**25-1 Shinseol-Dong, Tongdaemoon-Gu**
**Seoul(KR)**

(72) Inventor: **Seong, Ki Ho**
**25-1 Shinseol-Dong, Tongdaemoon-Gu**
**Seoul(KR)**

(74) Representative: **Masch, Karl Gerhard, Dr.**
**Dipl.-Phys. et al**
**Patentanwälte Andrejewski, Honke & Partner**
**Theaterplatz 3 Postfach 10 02 54**
**W-4300 Essen 1(DE)**

(54) **Method and apparatus for controlling turning of headlights of vehicle.**

(57) A method and apparatus for controlling the turning of headlights (12) of a vehicle controls the direction of light from headlight according to driving conditions, in order to remove a dead sector not receiving the light from the headlight (12) during the turning of a vehicle, and to enable the driver to drive the vehicle safely. The method turns the headlight (12) downwardly as an oncoming vehicle is approaching and downwardly and upwardly according to the vehicle speed when no vehicle is approaching. And the method also controls the headlight (12) in turning to the right and left according to the driving direction and angle of the vehicle when turning the vehicle. The apparatus comprises a device (20) for turning the headlight (12) laterally and detecting the lateral turning angle, a device (30) for turning headlight (12) vertically and detecting the vertical turning angle, a photoconductive element (51) for detecting an oncoming vehicle, and a vehicle speed detector (52) for detecting the driving speed of the vehicle.

FIG. 5

The present invention relates to a method and apparatus for controlling the turning of headlights of a vehicle, which are capable of adjusting the direction of light radiating from the headlights, by turning the headlights vertically as well as laterally.

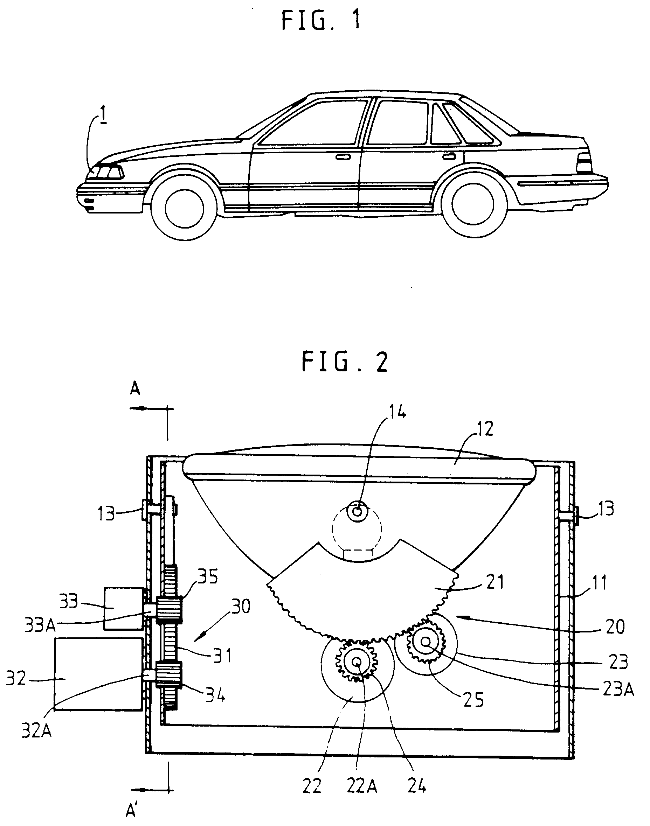

Generally, vehicles of various types include headlights which are disposed at both sides of the front portion of each vehicle. Fig. 1 illustrates an example of headlights provided for a sedan. The headlights 1 provide light at the front of a vehicle at night, so that the driver can drive safely. Each headlight 1 includes an upward lamp providing light to an the area being a great distance from the vehicle and a downward lamp providing light to the area being a short distance from the vehicle. The driver turns on the lamps selectively, according to driving conditions. However, if an oncoming vehicle is approaching during the driving of a vehicle under the condition of turning on the upward lamp, the light radiating from the upper lamp is flashed into the eyes of the driver in the oncoming, thereby interfering with his safe driving. In this case, it is necessary to turn on the downward lamp. On the other hand, the downward lamp should also be turned on during the driving of vehicle at low speed. During the driving of vehicle at high speed, however, the upward lamp should be turned on. Due to such manipulations of turning on upward and downward lamps selectively, conventional headlight devices cause trouble to drivers, resulting in an interference with a safe driving.

Also, conventional vehicles have no means for turning the headlights laterally. As a result, a dead sector which the headlights cannot reach is generated during the turning of a vehicle, so that the vehicle may strike various obstacles.

Therefore, an object of the invention is to provide a method and apparatus for controlling the turning of headlights of a vehicle, which is capable of adjusting the direction of light radiating from the headlights each having a single lamp, by turning the headlights vertically, depending upon the vehicle speed, so as to flash light selectively at the area a great distance away from the vehicle and at the area a short distance away from the vehicle.

Another object of the invention is to provide a method and apparatus for controlling the turning of headlights of a vehicle, which is capable of turning the headlights downwardly, irrespective of vehicle speed, when an oncoming vehicle is coming closer, so that the driver in the oncoming vehicle can drive safely.

In one aspect, the present invention provides a method for controlling the turning of headlights of a vehicle, comprising the steps of: detecting whether an oncoming vehicle is coming closer; adjusting the radiation direction of headlights downwardly when an oncoming vehicle coming closer has been detected at the detecting step; detecting the vehicle speed to adjust the vertical turning angle of headlights according to the detected vehicle speed, when no oncoming vehicle coming closer has been detected at the detecting step; and detecting the turning direction and turning angle of vehicle to turn the headlights laterally according to the detected turning direction and turning angle.

In another aspect, the present invention provides an apparatus for controlling the turning of headlights of a vehicle comprising: first means for turning laterally the headlights and detecting the lateral turning angle of headlights; second means for turning vertically the headlights and detecting the vertical turning angle of headlights; third means for detecting the turning direction and turning angle of vehicle, based on the turning direction and turning angle of a handle of the vehicle; fourth means for detecting whether an oncoming vehicle is coming closer; fifth means for detecting the driving speed of vehicle; and sixth means for controlling the first means and second means, in response to output signals from the first means to fifth means, so as to turn the headlights laterally or vertically.

In particular, the vertical and lateral turning of headlights can be controlled manually as well as automatically, in accordance with the present invention. Accordingly, it is possible to provide a convenience to drivers. By virtue of the detection of vertical and lateral turning angles of headlights, it is also possible to turn the headlights through accurate angles.

When an oncoming vehicle is approaching, the headlights are controlled to be turned downwardly, irrespective of the vehicle speed, by virtue of a photoconductive element detecting whether an oncoming vehicle is approaching, so that the driver in the oncoming vehicle can drive safely.

Other objects and aspects of the invention will become apparent from the following description of embodiments with reference to the accompanying drawings in which:

Fig. 1 is a perspective view of a vehicle equipped with a conventional headlight device;

Fig. 2 is sectional view of apparatus for controlling the turning of headlights in accordance with an embodiment of the present invention;

Fig. 3 is a cross-sectional view taken along the line A-A' of Fig. 2;

Fig. 4 is a partially-taken elevation view of a turning direction detecting device of the apparatus according to the present invention;

Fig. 5 is a circuit diagram of a circuit for controlling the apparatus according to the present invention; and

Fig. 6 is a flowchart of the control operation performed by a microcomputer shown in Fig. 5.

Referring to Fig. 2, there is shown apparatus for controlling the turning of headlights in accordance with the present invention. In the drawing, the reference numeral "10" designates an outer box, "11" an inner box contained in the outer box 10 and pivotally mounted to the outer box 10 to rotate vertically, by means of a pair of shafts 13 protruded outwardly from opposite side walls of the inner box 11 to opposite side walls of the outer box 10, respectively, and "12" a headlight contained in the inner box 11 and pivotally mounted to the inner box 11 to rotate laterally, by means of a shaft 14 protruded downwardly from the top wall of the inner box 11.

In accordance with present invention, the apparatus for controlling the turning of headlights comprises a device 20 for turning laterally the headlight 12 through a predetermined angle and detecting the lateral turning angle. As shown in Fig. 2, the device 20 comprises a horizontal sector gear 21 fixed to the headlight 12, a lateral rotation motor 22 having a vertical rotation shaft 22A to which a gear 24 engaging with the sector gear 21 is fixedly mounted, and a lateral turning angle detecting variable resistor 23 having a vertical rotation shaft 23A to which a gear 25 engaging with the sector gear 21 is fixedly mounted. The motor 22 and the variable resistor 23 are disposed within the inner box 11. With this construction, as the motor 22 drives, the sector gear 21 engaging with the gear 24 mounted to the rotation shaft 22A of motor 22 rotates laterally, thereby causing the headlight 12 to turn laterally through a predetermined angle around the shaft 14. By the rotation of sector gear 21, the gear 25 mounted to the rotation shaft 23A of variable resistor 23 also rotates, so that the variable resistor 23 varies in resistance, thereby enabling the turning angle of headlight 12 to be detected.

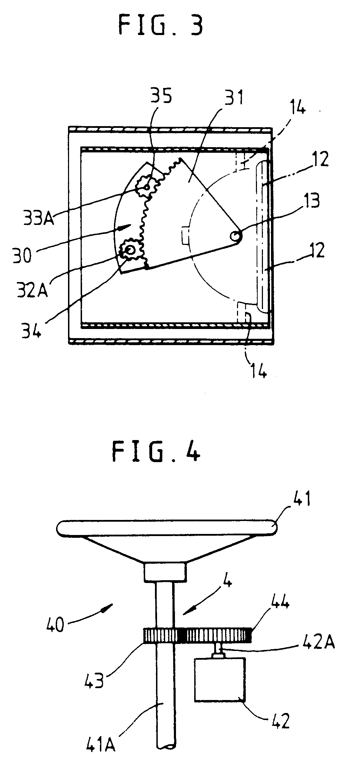

The apparatus for controlling the turning of headlights also comprises a device 30 for turning vertically the headlight 12 through a predetermined angle and detecting the vertical turning angle. As shown in Fig. 2 and more specifically Fig. 3, the device 30 comprises a vertical sector gear 31 fixed to one side wall of the inner box 11 by means of the shaft 13 fixed to the side wall, a vertical rotation motor 32 having a horizontal rotation shaft 32A to which a gear 34 engaging with the sector gear 31 is fixedly mounted, and a vertical turning angle detecting variable resistor 33 having a horizontal rotation shaft 33A to which a gear 35 engaging with the sector gear 31 is fixedly mounted. With this construction, as the motor 32 drives, the sector gear 31 engaging with the gear 34 mounted to the rotation shaft 32A of motor 32 rotates vertically, thereby causing the inner box 11 and thus the headlight 12 to turn vertically through a predetermined angle around shafts 13. By the rotation of sector gear 31, the gear 33 mounted to the rotation shaft 33A of variable resistor 33 also rotates, so that the variable resistor 33 varies in resistance, thereby enabling the turning angle of headlight 12 to be detected.

In accordance with the present invention, the apparatus for controlling the turning of headlights also comprises a device 40 for detecting the turning direction of a vehicle. As shown in Fig. 4, the device 40 comprises a turning direction detecting variable resistor 42 having a vertical rotation shaft 42A to which a gear 44 is fixedly mounted. The gear 44 engages with a gear 43 which is fixedly mounted to a handle shaft 41A of a handle 41. With this construction, as the driver turns the handle 41, the gear 43 fixed to the handle shaft 41A rotates, thereby causing the gear 44 engaging with the gear 43 to rotate. By the rotation of gear 44, the rotation shaft 42A of variable resistor 42 rotates, so that the variable resistor 42 varies in resistance, thereby enabling the turning direction of the vehicle to be detected.

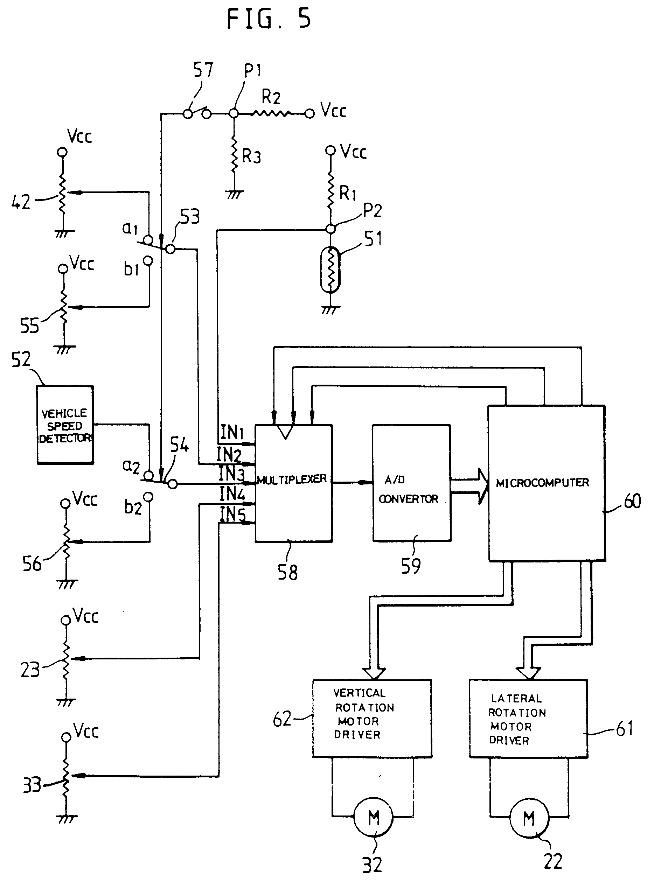

On the other hand, the apparatus for controlling the turning of headlights in accordance with the present invention also comprises a circuit for controlling devices 20, 30 and 40 mentioned above. As shown in Fig. 5, the control circuit comprises a photoconductive element 51 series connected at one side thereof to a resistor R1 connected to a power source Vcc and at the other side thereof to ground, said photoconductive element being adapted to detect light radiating from an oncoming vehicle approaching, a vehicle speed detector 52 having a speed detect element such as a tachometer, a first control switch 53 having one fixed terminal al connected with the slidable terminal of turning direction detecting variable resistor 42, a second control switch 54 having one fixed terminal a2 connected with the output terminal of vehicle speed detector 52, and an automatic/manual operation select switch 57 having one terminal connected to the junction P1 of series connected resistors R2 and R3 which are also connected to the power source Vcc and ground, respectively, and the other terminal connected to respective control terminals of first and second control switches 53 and 54.

For controlling manually the turning of headlight 12, there are provided two variable resistors 55 and 56 for adjusting lateral and vertical turnings of headlight 12, respectively. The variable resistor 55 is connected at one side thereof to the power source Vcc and at the other side to ground, and provided with a slidable terminal connected to the other fixed terminal b1 of first control switch 53. Similary, the variable resistor 56 is connected at one side thereof to the power source Vcc and at the other side to ground, and provided with a slidable terminal connected to the other fixed terminal b2 of second control switch 54.

In accordance with the present invention, the control circuit also comprises a multiplexer 58 having input terminals IN1 to IN5 connected with the junction P2 of series connected photoconductive element 51 and resistor R1, the movable terminal of first control switch 53, the movable terminal of second control switch 54, the slidable terminal of lateral turning angle detecting variable resistor 23 and the slidable terminal of vertical turning angle detecting variable resistor 33, respectively. A microcomputer 60 is connected to the output terminal of multiplexer 58, via an analog/digital convertor 59 (hereinafter, referred to as an A/D convertor).

The microcomputer 60 controls the multiplexer 58 to output selectively signals received at input terminals IN1 to IN5. To the microcomputer 60, a lateral rotation motor driver 61 and a vertical rotation motor driver 62 are coupled so that the lateral rotation motor 22 and vertical rotation motor 32 drive in a normal direction or a reverse direction, under the control of microcomputer 60.

The photoconductive element 51 is an element having a negative resistance characteristic such that its resistance decreases upon receiving light and functions to detect the light radiating from an oncoming vehicle. When the first and second control switches 53 and 54 receive a high voltage at respective control terminals thereof, they connect movable terminals to each one fixed terminal a1 and a2, respectively. On the other hand, upon receiving a low voltage, they connect movable terminals to another fixed terminal a1 and a2, respectively.

The operation of the apparatus of the present invention will now be described in detail.

Where the radiation direction of the headlight 12 is desired to be automatically controlled, the automatic/manual operation select switch 57 is switched to its closed state, under the condition that a source voltage from the power source Vcc is applied to the apparatus. As the select switch 57 is switched to its closed state, the source voltage is applied to the control terminals of first and second control switches 53 and 54, via the resistor R2 and the select switch 57, thereby causing the control switches 53 and 54 to be switched such that movable terminals are connected to one fixed terminals al and a2, respectively. As a result, the output voltage form the slidable terminal of turning direction detection variable resistor 42 and the output voltage from the vehicle speed detector 52 are received by the multiplexer 58 at input terminals IN2 and IN3, via control switches 53 and 54, respectively.

On the other hand, the multiplexer 58 also receives at its input terminal IN1 a signal from the photoconductive element 51. Under the control of microcomputer 60, the multiplexer 58 supplies the received signal to the A/D convertor 59. The A/D convertor 59 converts the received signal into a digital signal which is, in turn, received by the microcomputer 60. In response to the signal from the photoconductive element 51, the microcomputer 60 detects whether an oncoming vehicle is approaching. Upon detecting that an oncoming vehicle is approaching, the microcomputer 60 controls the vertical rotation motor driver 62 so that the vertical rotation motor 32 drives to turn the headlight 12 downwardly, irrespective of vehicle speed. Consequently, the headlight 12 radiates light downwardly.

If no vehicle is approaching, microcomputer 60 controls the multiplexer 58 so that the output voltage from the vehicle speed detector 52 and the output voltage from the slidable terminal of vertical turning angle detecting variable resistor 33 received by the multiplexer 58 at input terminals IN3 and IN5 are sequentially selected by the multiplexer 58 to be supplied to the A/D convertor 59. Thereafter, the A/D convertor 59 converts the sequentially received output voltage of the vehicle speed detector 52 and slidable terminal output voltage of the vertical turning angle detecting variable resistor 33 into digital signals, respectively, and then applies them to the microcomputer 60.

Subsequently, the microcomputer 60 compares the received output voltage of the vehicle speed detector 52 with the slidable terminal output voltage of the vertical turning angle detecting variable resistor 33 and controls the vertical rotation motor driver 62 according to the comparison, to drive the vertical rotation motor 32 normally or in reverse, thereby enabling the radiation direction of headlight 12 to be controlled. In case the output voltage of the vehicle speed detector 52 is higher than the slidable terminal output voltage of the vertical turning angle detecting variable resistor 33, that is, when the vehicle speed is low, the radiation direction of headlight 12 is set downward. On the other hand, in case the output voltage of the vehicle speed detector 52 is lower than the slidable terminal output voltage of the vertical turning angle detecting variable rsistor 33, that is, when the vehicle speed is high, the radiation direction of headlight 12 is set upward.

After control of the vertical turning of head light 12 has been completed as above mentioned, the microcomputer 60 controls again the multiplexer 58 so that the output voltage from the slidable terminal of turning direction detecting variable resistor 42 and the output voltage from the slidable terminal of lateral turning angle detecting variable resistor 23 received by the multiplexer 58 at input terminals IN2 and IN4 are sequentially selected by the multiplexer 58 to be supplied to the A/D convertor 59. Thereafter, the A/D convertor 59 converts the sequentially received slidable terminal output voltage of turning direction detecting variable resistor 42 and slidable terminal output voltage of lateral turning angle detecting variable resistor 23 into digital signals, respectively, and then applies them to the microcomputer 60.

Subsequently, the microcomputer 60 compares the slidable terminal output voltage of turning direction detecting variable resistor 42 with the slidable terminal output voltage of lateral turning angle detecting variable resistor 23 and controls the lateral rotation motor driver 61 according to the comparison, to drive the lateral rotation motor 22 normally or in reverse, thereby enabling the headlight 12 to be turned left or right, depending upon the turning direction and turning angle of the vehicle. In case the slidable terminal output voltage of turning direction detecting variable resistor 42 is lower than the slidable terminal output voltage of lateral turning angle detecting variable resistor 23, that is, when the vehicle turns left, the headlight 12 is turned left. On the other hand, in case the slidable terminal output voltage of turning direction detecting variable resistor 42 is higher than the slidable terminal output voltage of lateral turning angle detecting variable resistor 23, that is, when the vehicle turns right, the headlight 12 is turned right.

On the other hand, where the automatic/manual operation select switch 57 is switched to its opened state, a low level voltage from the select switch 57 is applied to the control terminals of first and second control switches 53 and 54, thereby causing the control switches 53 and 54 to be switched such that the movable terminals are connected to the other fixed terminals b1 and b2, respectively. As a result, the microcomputer 60 receives sequentially the slidable terminal output voltage from the lateral turning angle detecting variable resistor 23, the slidable terminal output voltage from the vertical turning angle detecting variable resistor 33, the slidable terminal output voltage from the lateral turning adjusting variable resistor 55 being varied according to the manual adjustment by the driver and the slidable terminal output voltage from the vertical turning adjusting variable resistor 56 being varied according to the manual adjustment by the driver, via the multiplexer 58 and the A/D convertor 59. In response to the received slidable terminal output voltages of lateral turning adjusting variable resistor 55 and lateral turning angle detecting variable resistor 23, the microcomputer 60 controls the lateral rotation motor driver 61 to drive the lateral rotation motor 22. The microcomputer 60 also controls the vertical rotation motor driver 62, in response to the received slidable terminal output voltages of vertical turning adjusting variable resistor 56 and vertical turning angle detecting variable resistor 33, so as to drive the vertical rotation motor 32. Thus, as the driver adjusts variable resistors 55 and 56, the radiation direction of headlight 12 can be adjusted vertically and laterally.

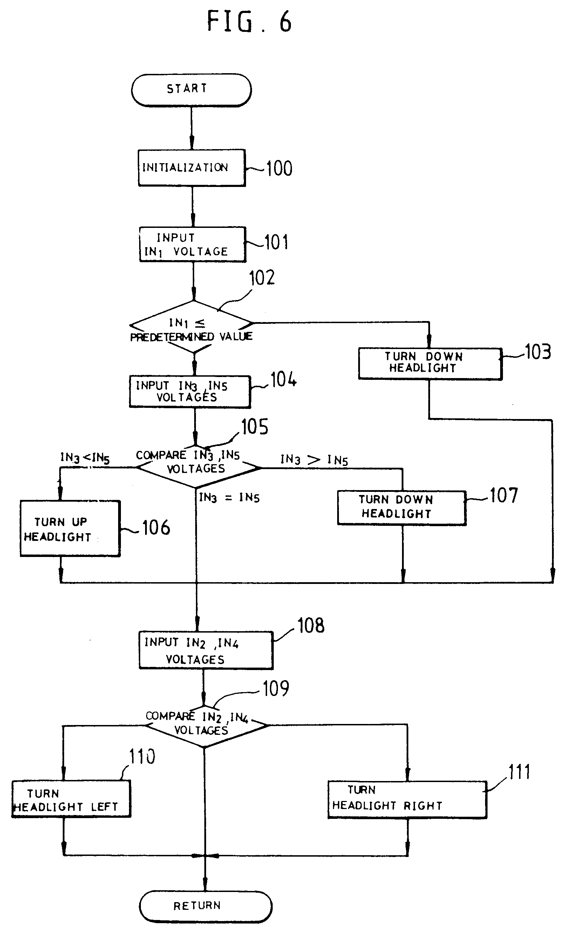

Fig. 6 illustrates a flowchart of the control operation performed by the microcomputer 60 shown in Fig. 5. The control operation illustrated in the flowchart of Fig. 6 will now be described, in conjunction with the control circuit shown in Fig. 5.

At the step 100, the microcomputer 60 performs an initialization. Then, the microcomputer 60 controls the multiplexer 58 to receive the voltage applied to the input terminal IN1 of multiplexer 58, at the step 101. At the step 102, the received input terminal IN1 voltage is compared with a predetermined value by the microcomputer 60. If the input terminal IN1 voltage is not higher than the predetermined value, the microcomputer 60 determines that an oncoming vehicle is approaching and executes the step 103. At the step 103, the microcomputer 60 drives the vertical rotation motor 32 to turn the headlight downwardly, by controlling the vertical rotation motor driver 62. As a result, the light radiating from the headlight 12 is not flashed in the eyes of the driver in the oncoming vehicle. However, when the input terminal IN1 voltage is higher than the predetermined value, the microcomputer 60 determines that no vehicle is approaching and executes the step 104. At the step 104, the microcomputer 60 receives sequentially the terminals IN3 and IN5 of multiplexer 58 and then compares the received voltages with each, at the step 105. If the input terminal In3 voltage is lower than the input terminal IN5 voltage, the microcomputer 60 drives the vertical rotation motor 32 to turn the headlight 12 upwardly, by controlling the vertical rotation motor driver 62, at the step 106. Otherwise, when the input terminal IN3 voltage is hogher than the input terminal IN5 voltage, the microcomputer 60 drives the vertical rotation motor 32 to turn the headlight 12 downwardly, at the step 107. That is, in case there is an approaching vehicle, the microcomputer 60 turns the headlight 12 downwardly, irrespective of vehicle speed. On the other hand, in case there is no oncoming vehicle, the microcomputer 60 turns the headlight 12 upwardly, the larger turning angle of headlight 12 as the higher vehicle speed, by comparing the input terminal IN3 voltage based on the vehicle speed with the input terminal IN5 voltage based on the turned state of headlight 12.

When the input terminal IN3 voltage is equal to the input terminal IN5 voltage in step 105, after completing the vertical turning of headlight 12, that is, executing the step 103, the step 106, or the step 107, the microcomputer 60 receives sequentially the voltages applied to the input terminals IN2 and IN4 of multiplexer 58 at the step 108 and then compares the received voltages with each other, at the step 109. If the input terminal IN2 voltage is lower than the input terminal IN4 voltage, the microcomputer 60 determines that the vehicle is turning left and then executes the step 110. At the step 110, the microcomputer 60 drives the lateral rotation motor 22 to turn the headlight 12 left, by controlling the lateral rotation motor driver 22. Otherwise, when the input terminal IN2 voltage is higher than the input terminal IN4 voltage, the microcomputer 60 determines that the vehicle is turning right and then executes the step 111. At the step 111, the microcomputer 60 drives the lateral rotation motor 22 to turn the headlight 12 right, by controlling the lateral rotation motor driver 22.

As is apparent from the above description, the present invention provides a method and apparatus for controlling the turning of headlights of a vehicle, by turning the headlights downwardly when an oncoming vehicle is approaching and turning the headlights upwardly or downwardly according to vehicle speed, when no vehicle is approaching. Accordingly, there is no trouble to the driver in having to adjust manually the turning of headlights when driving. When the vehicle turns left or right, the headlights are turned left or right according to the turning direction of the vehicle, in accordance with the present invention. As a result, it is possible to remove the dead sector on which light from the headlight cannot be flashed, during the turning of the vehicle, thereby enabling the driver to drive the vehicle more safely.

Although the preferred embodiment of the invention have been disclosed for illustrative purposes, those skilled in the art will appreciate that various modifications, additions and substitutions are possible, without departing from the scope and spirit of the invention as disclosed in the accompanying claims.

## Claims

1. A method for controlling the turning of headlights (12) of a vehicle comprising the steps of:

   detecting whether an oncoming vehicle is approaching;

   adjusting the radiation direction of headlights (12) downwardly when an oncoming vehicle has been detected at the detecting step;

   detecting vehicle speed to adjust the vertical turning angle of headlights (12) according to the detected vehicle speed, when no oncoming vehicle has been detected at the detecting step; and

   detecting the turning direction and turning angle of the vehicle to turn the headlights (12) laterally according to the detected turning direction and turning angle.

2. Apparatus for controlling the turning of headlights (12) of a vehicle comprising:

   first means (20) for turning laterally the headlights (12) and detecting the lateral turning angle of headlights (12);

   second means (30) for turning vertically the headlights (12) and detecting the vertical turning angle of headlights (12);

   third means (40) for detecting the turning direction and turning angle of vehicle, based on the turning direction and turning angle of a handle (41) of the vehicle;

   fourth means (51) for detecting an oncoming vehicle;

   fifth means (52) for detecting the driving speed of a vehicle; and

   sixth means (58-60) for controlling the first means (20) and second means (30), in response to output signals from the first means (20) to fifth means (52), so as to turn the headlights (12) laterally and vertically.

3. The apparatus in according with claim 2, wherein the first means (20) comprises a sector gear (21) fixed to each headlight (12), a lateral rotation motor (22) adapted to rotate the sector gear (21), so as to turn the headlight (12) laterally, and a variable resistor (23) adapted to detect the lateral turning angle of headlight (12), the variable resistor (23) being varied in resistance, depending upon the rotation of sector gear (21).

4. The apparatus in accordance with claim 2 or 3, wherein the second means (30) comprises an inner box (11) mounted in a headlight (12) containing box (10) of the vehicle to rotate vertically and adapted to contain each headlight (12) therein, a sector gear (31) fixed to the inner box (11), a vertical rotation motor (32) adapted to rotate the sector gear (31), so as to turn the headlight (12) vertically, and a variable resistor (33) adapted to detect the vertical turning angle of headlight (12), the variable resistor (33) being varied in resistance, depending upon the rotation of sector gear (31).

5. The apparatus in accordance with any of the claims 2 to 4, wherein the third means (40) comprises a variable resistor (42) disposed at a rotation shaft (41 A) of the vehicle handle (41) and provided with a rotation shaft (42 A) and a pair of gears (43, 44) engaging with each other and fixedly mounted to the rotation shaft (41 A) of vehicle handle (41) and the rotation shaft (42 A) of variable resistor (42), respectively, so that the variable resistor (42) varies in resistance, depending upon the turning of vehicle handle (41).

6. The apparatus in accordance with any of the claims 2 to 5, wherein the fourth means (51) comprises a photoconductive element being varied in resistance upon receiving light.

FIG. 1

FIG. 2

# FIG. 3

# FIG. 4

# FIG. 5

# FIG. 6

START

INITIALIZATION —100

INPUT
$IN_1$ VOLTAGE —101

102

$IN_1 \leq$ PREDETERMINED VALUE

TURN DOWN
HEADLIGHT —103

INPUT $IN_3, IN_5$
VOLTAGES —104

105

COMPARE $IN_3, IN_5$
VOLTAGES

$IN_3 < IN_5$

$IN_3 > IN_5$

$IN_3 = IN_5$

TURN UP
HEADLIGHT —106

TURN DOWN
HEADLIGHT —107

INPUT $IN_2, IN_4$
VOLTAGES —108

109

COMPARE $IN_2, IN_4$
VOLTAGES

110

TURN
HEADLIGHT LEFT

TURN
HEADLIGHT RIGHT —111

RETURN

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN<br>vol. 13, no. 334 (M-855)(3682) 27 July 1989<br>& JP-A-1 111 546 ( MITSUBISHI ELECTRIC CO )<br>* abstract * | 1 | B60Q1/115<br>B60Q1/12<br>B60Q1/14 |
| A | FR-A-2 289 366 (DAIMLER-BENZ AG)<br>* claims 1-3; figures 2,3 * | 1 | |
| A | FR-A-1 587 078 (REGIE NATIONALE DES USINES RENAULT)<br>* page 4, line 2 - line 10; claim 1; figure 1 * | 1 | |
| A | DE-B-1 284 861 (BAUMANNS)<br>* claims 1-3; figures 1,2 * | 1 | |
| A | FR-A-1 455 408 (PROJECTEURS CIBIE)<br>* claims 1-3; figures 1,4 * | 1 | |
| A | EP-A-0 340 735 (NISSAN MOTOR CO)<br>* abstract; figure 10 * | 1 | |
| | ----- | | TECHNICAL FIELDS SEARCHED (Int. Cl.5 )<br><br>B60Q |

The present search report has been drawn up for all claims

| Place of search | Date of completion of the search | Examiner |
|---|---|---|
| THE HAGUE | 15 JULY 1992 | Onillon  C.G.A. |